# EUROPEAN PATENT SPECIFICATION

(11) **EP 1 853 033 B1**
(45) Date of publication and mention of the grant of the patent: **30.12.2009**
(21) Application number: 06828192.2
(22) Date of filing: 28.11.2006
(51) Int. Cl.: H04L 29/06, H04L 12/18, H04L 12/58

(54) **A METHOD AND SYSTEM OF NOTIFICATION USING AN INSTANT MESSAGING BLOCK MESSAGE**
VERFAHREN UND SYSTEM ZUR BENACHRICHTUGUNG UNTER VERWENDUNG EINER INSTANT-MESSAGING-BLOCKNACHRICHT
PROCÉDÉ ET SYSTÈME DE NOTIFICATION METTANT EN OEUVRE UN MESSAGE DE BLOC DE MESSAGERIE INSTANTANÉE

(30) Priority: 11.01.2006 CN 200610006587
(43) Date of publication of application: 07.11.2007
(73) Proprietor: Huawei Technologies Co., Ltd., Longgang District Shenzhen Guangdong 518129 (CN)
(72) Inventor: MU, Lunjian, Guangdong 518129 (CN)
(74) Representative: Kreuz, Georg Maria
(86) International application number: PCT/CN2006/003200
(87) International publication number: WO 2007/079645

(56) References cited:
- EP-A2- 1 463 250
- WO-A-01/52072
- WO-A-03/107575
- CA-A1- 2 459 113
- CN-A- 1 314 757
- CN-A- 1 591 441
- US-B1- 6 339 784

## Description

### Field of the Invention

The present invention relates to communications, information and Internet technologies, and particularly, to a method for determining whether a user blocks other users and for notifying the user in an Instant Messaging system. More particularly, the present invention relates to a method and system for instant notification of communication block information.

### Background of the Invention

The present invention relates to Instant Messaging (IM) services over mobile communication networks and Internet. The mobile communication networks include existing 2G (2nd Generation) and 2.5G mobile networks, future 3G (3rd Generation) mobile communication network and IP Multimedia Subsystem (IMS) etc. The IM service is a mobile data service of person-to-person or person-to-group message-type based on presence service.

An international standard organization, Open Mobile Alliance (OMA), has developed a standard for mobile IM. There are two types of IM systems in the standard of current version. The first type is Wireless Village (WV)- based IM system, the WV-based IM system is based on protocols borne over Hyper Text Transfer Protocol / Wireless Access Protocol / Short Message Service (HTTP/WAP/SMS) and supports 2.5G/3G networks. The second type is Session Initiation Protocol (SIP) / SIP for Instant Messaging and Presence Leveraging Extensions (SIMPLE)-based IM system, which is based on protocols borne over SIP/SIMPLE and supports IMS-based IP networks.

In an SIP/SIMPLE-based IM system, particularly in a chat room system in SIMPLE IM system, there may be such a scenario: assuming there is a chat room of SIMPLE IM which is activated, and a new user is joining the chat room, if user M in the chat room has blocked the new user, the chat room will notify the user M that the new user which he has blocked has joined the chat room. On the other hand, if the new user has blocked a user which is already in the chat room, the chat room will notify the new user that the user which he has blocked is present in the chat room.

In this application document, the "block" is similar to a blacklist. When a user A lists a user B in user A's block list, the user B is not able to send instant messages to the user A. In this situation, the user A is called a blocking party and the user B is called a blocked party. The concept of the "block", put forward in the WV-based IMPS, is of similar meaning as that of the "block" in the SIP/SIMPLE IM.

In the IMPS system based on WV protocol and SIP/SIMPLE IM standard, there is a related block technology mainly including: a user A may arrange and manage its own block list at a server, and the server controls users contained in the block list so that these users in the list can not interchange instant messages with the user A. But the technology for notifying a blocking party in a chat room has not been mentioned in the IMPS system based on WV protocol and SIP/SIMPLE IM standard.

In the prior art, the instant messaging system conforming to the SIP/SIMPLE IM standard does not provide a method for determining block relationship between users and notifying block information in a chat room system.

WO 01/52072 A discloses a method of creating forums in a system of computers, including the maintenance of a forum list by a forum controller. Each participant in each forum in the system of computers is encoded in the forum list. When a user creates a forum, the forum is added to the forum list by the forum controller. Any user in the system may create a forum. Forums may be designated as public or private and may be password protected. Forums may also be designated as moderated or unmoderated. Some participants in moderated forums can evict or ban other participants from the forum. Some participants in moderated forums determine which participants will have a right to speak. Forums designated controlled forums limit the maximum number of participant who may speak at any time.

US 6,339,784 B1 discloses a method and means for self-policing and automatically rate-liming multiple-user online forums. The embodiments of the invention include a set of rules that permit users to censure other users. A censured user has one or more "privileges" taken away or diminished. The online computer system automatically tracks the rate at which a user sends certain types of messages, and can message rate limit a user who uses too many system resources.

WO 03/107575 A discloses a system for providing communication event routing and transfer capability in a multi-site communication-center environment. The system utilizes a presence protocol application and a routing application for determining availability of an agent or system and for setting up the transfer from a point of transfer on a network to a destination of transfer on the same or connected network.

### Summary of the Invention

Embodiments of the present invention provide a method for determining block relationship between users and notifying block information in an instant communication system, so as to determine the block relationship between the users and notifying the block information.

An embodiment of the present invention provides a method for notifying block information. The method includes:
obtaining, by an instant messaging control server, a block relationship between the a new user and an existing user when the new user joins an instant messaging system;
determining, by the instant messaging control server, whether to sending a notification message containing block information to a client of blocking party according to the obtained block relationship, and sending the notification message if there is a block relationship between the new user and the existing user.

Preferably, the block relationship between the new user and the existing user is contained in a user block list in the instant messaging control server.

According to an embodiment, a method for notifying block information includes:
determining, by a user home instant messaging server, whether there is a block relationship between athe new user and an existing user when the new user joins an instant messaging system according to a user block list stored in the user home instant messaging server, and sending a notification message containing block information to a client of blocking party if there is a block relationship between the new user and the existing user.

According to an embodiment, another method for notifying block information includes:
determining whether a new user or an existing user is blocked according to a stored or obtained user block list by a client of a user when the new user joins an instant messaging system; and if the new user or an existing user is blocked, presenting block information to the client, the user being one of the new user or the existing user.

Optionally the client determines whether there is a block relationship according to a received state change notification message of the instant messaging system, the state change notification message is sent from a control server to the client of the user in the instant messaging system after the new user joins the instant messaging system, and the state change notification message is subscribed by the user.

According to an embodiment, an instant messaging system is provided, the system includes:
an instant messaging terminal, for joining an instant messaging system, and for receiving a notification message containing block information;
an instant messaging control server, for accepting a new user corresponding to the instant messaging terminal to join the activated instant messaging system, obtaining a block relationship between the new user and an existing user, sending the notification message containing the block information to a client of blocking party according to the obtained block relationship, and sending the notification message if there is a block relationship between the new user and the existing user.

According to an embodiment of the invention, there is provided a method for notifying block information, which includes: determining, by a user home instant messaging server of a blocking party, whether a new user or an existing user is blocked by the blocking party according to a user block list of the blocking party stored in the user home instant messaging server when the new user joins an instant messaging system; sending, by the user home instant messaging server, a notification message containing block information to a client of the blocking party notifying the blocking party that a blocked user is in the instant messaging system if determining that the new user or the existing user is blocked by the blocking party, wherein the blocking party is one of the new user and the existing user, and the blocked user is the other one of the new user and the existing user.

According to another embodiment of the invention, there is provided an instant messaging system, which includes an instant messaging terminal, for joining an instant messaging system, and for receiving a notification message containing block information; and an instant messaging control server, for accepting a new user corresponding to the instant messaging terminal to join the instant messaging system, obtaining a block relationship between the new user and an existing user, sending the notification message containing the block information to a client of a blocking party if there is a block relationship between the new user and the existing user informing the blocking party that a blocked user is in the instant messaging system. The blocking party is one of the new user and the existing user, and the blocked user is the other one of the new user and the existing user.

According to another embodiment of the invention, there is provided an instant messaging system, which includes an instant messaging terminal, for joining an instant messaging system, and receiving a notification message containing block information; an instant messaging control server, for accepting a new user corresponding to the instant messaging terminal to join the instant messaging system; and a user home instant messaging server, for storing a user block list, determining that there is a block relationship between the new user and an existing user according to the user block list, and sending a notification message containing block information to a client of blocking party informing the blocking party that a blocked user is in the instant messaging system. The blocking party is one of the new user and the existing user, and the blocked user is the other one of the new user and the existing user.

In summary, in the technical solution according to an embodiment of the present invention, the IM control server determines whether to send a notification message containing the block information to the client of the blocking party according to the block relationship between the new user and the existing user. If there is a block relationship between the new user and the existing user, the IM control server sends the notification message. The client may determine whether the new user or the existing user is blocked according to a stored or obtained user block list. If the new user or the existing user is blocked, the client presents the block information. In this way, when a SIP/SIMPLE IM user joins an IM system (for example, a chat room), the newly joined user or an existing user may be notified whether a blocked user is in the chat room. Accordingly, the SIP/SIMPLE IM system is enabled to support the whole solution with respect to the chat room service, and the user experience may be improved.

### Brief Description of the Drawings

Figure 1 is a schematic diagram illustrating the structure of a chat room system according to an embodiment of the present invention;
Figure 2 is a schematic diagram illustrating an overall flow of an exemplary embodiment of the present invention;
Figure 3 is a flow diagram illustrating a client joining a chat room according to an embodiment of the present invention;
Figure 4 is a flow diagram illustrating a control server sending block information to a user already in the chat room according to an embodiment of the present invention;
Figure 5 is a flow diagram illustrating the home IM server of a user sending block information to a user already in the chat room according to an embodiment of the present invention;
Figure 6 is a flow diagram illustrating a control server sending block information to a newly joined user according to an embodiment of the present invention;
Figure 7 is a flow diagram illustrating the home IM server of a user sending block information to a newly joined user according to an embodiment of the present invention.

### Detailed Description of the Embodiments

For a better understanding of the principle, features of the invention would be given in detailed description below by way of examples of a chat room system.

Embodiment of the present invention provide a process and method for determining block relationship between users and notifying block information in a SIP/SIMPLE-based instant messaging communication system. In a SIP/SIMPLE chat room system, a control server is used for managing and processing chat room services. The messages from a member in the chat room are sent to the control server of the chat room first, and then the control server of the chat room distributes the messages to other members in the chat room.

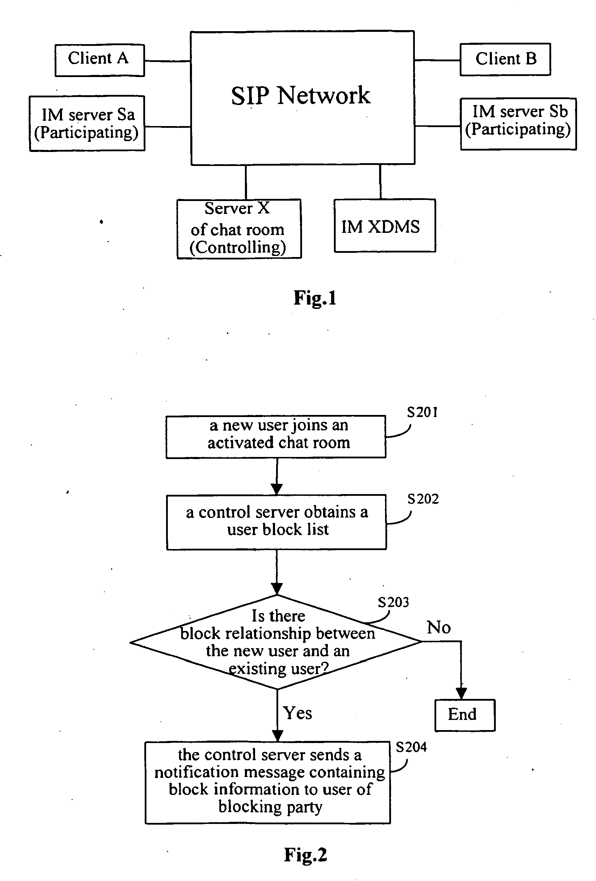

Figure 1 shows a schematic diagram illustrating a network structure of a chat room system. In the chat room system:
Client A represents a client of a user about to join the chat room system of SIMPLE IM.
Client B represents a client of a user having joined the chat room system of SIMPLE IM.
Server X represents a control server of SIMPLE IM in the chat room system. The server X plays a role of controlling (control function).
IM Server Sa represents home SIMPLE IM server of the client A. Since the server X is assumed to be the server of the chat room, the IM Server Sa plays a role of participating (participation function).
IM Server Sb represents home SIMPLE IM server of the client B. Since the server X is supposed to be the server of the chat room, the IM Server Sb plays a role of participating (participation function).
Instant Message XML Document Management Server (IM XDMS) represents a server for storing IM related information of the users using the IM servers, such as block lists and control strategies of the users.

In the networking shown in Figure 1, the control server of the chat room, i.e., the server X, and the IM Server Sa or Sb are different logic entities, which may be located in one physical entity or two different physical entities. In addition, the server X, the IM XDMS, the IM Server Sa, the IM Server Sb, the client A and the client B may be located in different SIP/IP Cores. If they are located in different SIP/IP Cores, signaling forwarding is required between different SIP/IP Cores. Regardless of the different networking structures, the principles of the signaling flows are similar. This has no substantial effect on the technical solution of the present invention and the understanding of those skilled in the art.

The SIP/IP Core in the present invention belongs to the core network of Multimedia Subsystem (for example, CSCF) or IP network defined in 3GPP and 3GPP2.

Figure 2 is a schematic diagram illustrating the overall flow of an exemplary embodiment of the present invention. The flow includes processes as follows:
S201. A new user joins a chat room which is activated.
S202. A control server of the chat room obtains a user block list.
S203. The control server of the chat room determines whether a block relationship exists between the new user and a user which is joined in the chat room earlier than the new user according to the user block list. If a block relationship exists, perform process of S204. Otherwise, the flow is ended.
S204. The control server of the chat room sends a notification message containing block information to client of the new user, i.e., the client of the blocking party.

Embodiments of the present invention will be described as follows, with the chat room system shown in Figure 1 as an example.

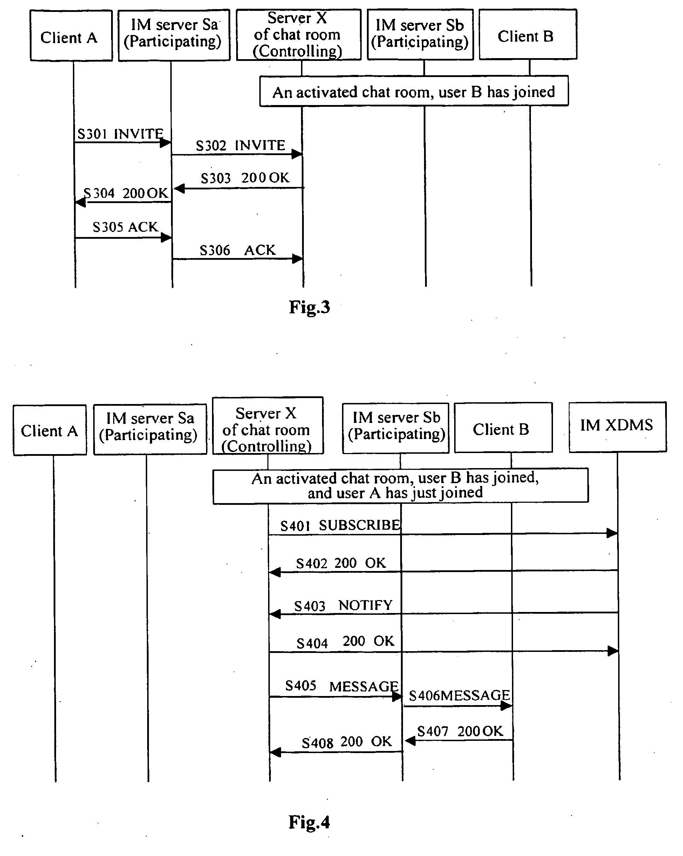

Figure 3 shows a process a client A joins an activated chat room according to an embodiment of the invention. The process includes the steps as follows:
S301. The client A requests to join the chat room, so the client A sends a SIP INVITE request to IM Server Sa (the server a). Request-URI in the SIP INVITE request contains a chat room identifier, and Accept-Contact in the SIP INIVITE request contains a Feature code of SIP/SIMPLE service, for example "+g.oma.sip-im" etc.. In addition, the SIP INVITE request carries transmission capability and negotiation parameter such as IP address, port number, supported transmission media type and the like of the client A in SDP parameters.
S302. The IM Server Sa reads the chat room identifier carried in the SIP INVITE and determines that the chat room corresponding to the chart room identifier belongs to server X, and initiates a new SIP INVITE request to the server X. The Request-URI of the new SIP INVITE request contains the chat room identifier, and the Accept-Contact contains the Feature code of SIP/SIMPLE service, for example, "+g.oma.sip-im" etc.. In addition, the new SIP INVITE request carries transmission capability and negotiation parameters such as IP address, port number, supported transmission media type and the like of the IM Server Sa in the SDP parameters.
S303. The server X performs authorization to the client A according to the new SIP INVITE request. If the authorization is passed and the client A is permitted to join the chat room, the server X sends a SIP 200 "OK" response to the IM Server Sa. The SDP parameters in the SIP 200 "OK" response carry the transmission capability and negotiation parameters such as IP address, port number, supported transmission media type and the like of the server X, which may be used by the IM Server Sa for establishing Message Session Relay Protocol (MSRP). The above-mentioned steps S301-S303 accomplish a negotiation for establishing an MSRP channel between the IM Server Sa and the server X, i.e., the control server of the chat room.
S304. The IM Server Sa sends a new SIP 200 "OK" to the client A. The SDP parameters in the new SIP 200 "OK" carry the transmission capability and negotiation parameters such as IP address, port number, supported transmission media type and the like of the IM Server Sa, which may be used by the client A for establishing MSRP.

The above-mentioned steps S301-S304 accomplish a negotiation for establishing an MSRP channel between the client A and the IM Server Sa.
S305. The client A sends a first acknowledge message SIP ACK to the IM Server Sa, acknowledging the receipt of the new SIP 200 "OK" sent from the IM Server Sa.
S306. The IM Server Sa sends a second acknowledge message SIP ACK to the server X, acknowledging the receipt of the SIP 200 "OK" response sent from the server X.

With the above-mentioned process, the MSRP channel between the client A and the IM Server Sa, and the MSRP channel between the IM Server Sa and the server X are established. Similarly, a direct MSRP channel may also be established between the client A and the server X.

In an embodiment as shown in Figure 4, some users (e.g. User B) which are already in the chat room have added a user A in their block lists. The control server of the chat room, i.e., the server X makes a query to the IM XDMS for the block relationship and sends a notification to these users in the chat room notifying that the user A has joined the chat room. In this embodiment, only the process of sending the notification to a user B is described, and the processes for other users are similar. The procedure is as follows:
S401. The server X sends a SIP SUBSCRIBE message to the IM XDMS of the user B. In the SIP SUBSCRIBE message, Request-URI is the URI (Uniform Resource Identifier) of the chat room, Event is sip-profile or ua-profile or the like, and Expires is 0.
S402. The IM XDMS sends a first SIP 200 "OK" response to the server X, indicating the receipt of the SIP SUBSCRIBE message.
S403. The IM XDMS retrieves a block list of the user B from its memory and sends an SIP NOTIFY message to the server X. The SIP NOTIFY message contains the block list of the user B.
S404. The server X sends a second SIP 200 "OK" response to the IM XDMS, indicating the receipt of the SIP NOTIFY message.
S405. The server X determines whether the user B has blocked the user A according to the SIP NOTIFY message, and if the user B has blocked the user A, sends to the IM Server Sb an SIP MESSAGE containing the URI of the user A blocked by the user B. If the user B has not blocked the user A, the procedure is ended.
S406. When receiving the SIP MESSAGE, the IM Server Sb determines that the destination party is client B, and forwards the SIP MESSAGE to the client B.
S407. The client B sends a third SIP 200 "OK" response to the IM Server Sb, indicating the receipt of the SIP MESSAGE.
S408. When receiving the third SIP 200 "OK" response, the IM Server Sb determines that the third SIP 200 "OK" response is a response to the server X, and forwards the third SIP 200 "OK" response to the server X.

The client B analyzes the SIP MESSAGE, and learns the user A blocked by the user B has joined the chat room.

Another embodiment of the present invention is similar to the embodiment as shown in Figure 4, and the difference between the two embodiments is at step S403, i.e., the server IM XDMS determines whether the user B has blocked the user A directly according to the block list of the user B stored in the IM XDMS, and returns the result of block by using the SIP NOTIFY. Accordingly, the rule content of Filter should be included in the SIP SUBSCRIBE message sent from the server X to the IM XDMS in step S401.

Similar to the embodiment shown in Figure 4, in another embodiment of the present invention, the control server X of the chat room communicates with the IM XDMS by using XML (Extensible Markup Language) Configuration Access Protocol (XCAP). Particularly, the steps S401-S404 as shown in the Figure 4 are simplified into the following two steps.
1. The server X sends to the IM XDMS of the user B (using HTTP GET) a XCAP message containing the URI of the user B;
2. The IM XDMS retrieves the block list of the user B from the memory and returns to the server X a XCAP message (HTTP 200 OK) containing the block list.

The subsequent steps are the same as the steps S405- S408 of the embodiment as shown in Figure 4.

Similarly, in another embodiment of the present invention, the IM XDMS may determine whether the user B has blocked the user A directly according to the block list of the user B stored in the IM XDMS. The result whether the user B has blocked the user A is contained in a XCAP message HTTP 200 OK.

Similar to the embodiment as shown in Figure 4, in another embodiment of the present invention, the block list of the user B is not stored in the server IM XDMS, but stored in the IM Server Sb of the user B. Particularly, the steps S401-S404 as shown in Figure 4 are modified into four steps as follows:
S411. The server X sends a SIP SUBSCRIBE message to the IM Server Sb. In the SIP message, Request-URI is URI of the chat room, Event is sip-profile or ua-profile etc., and Expires is 0.
S412. The IM Server Sb sends a first SIP 200 "OK" response to the server X, indicating the receipt of the SIP SUBSCRIBE message.
S413. The IM Server Sb retrieves a block list of the user B from the memory and sends a SIP NOTIFY message to the server X. The SIP NOTIFY message contains the block list of the user B.
S414. The server X sends a second SIP 200 "OK" response to the IM Server Sb, indicating the receipt of the SIP NOTIFY message.

The subsequent steps are the same as the steps S405-S408 of the embodiment as shown in Figure 4.

Similarly, in another embodiment of the present invention, the IM Server Sb may determine whether the user B has blocked the user A directly according to the block list of user B stored in the IM Server Sb. The result whether the user B has blocked the user A is contained in a returned NOTIFY message.

Similar to the embodiment as shown in Figure 4, in another embodiment of the present invention, the block list of user B is not stored in the server IM XDMS, but directly stored in the server X of the chat room. When client B joins the chat room, the IM Server Sb has brought the block list of the user B into the chat room. When the IM Server Sb forwards the SIP INVITE request, XML MIME BODY in the INVITE contains the block list of the user B. Thus the steps S401-S404 of the embodiment as shown in Figure 4 may be omitted, the server X determines whether the user B has blocked user A according to the block list of user B stored in the server X, and executes steps S405-S408 of the embodiment as shown in Figure 4.

Similar to the embodiment as shown in Figure 4, in another embodiment of the present invention, the block list of user B is stored in the IM Server Sb, and the user B has subscribed to a state change notification of the chat room. In other words, when a new user joins the chat room, the control server of the chat room has to notify the user B that a new user has joined the chat room. So, the server X of the chat room may send a SIP MOTIFY message to the IM Server Sb, then to the client B. The home IM server, i.e., IM Server Sb, determines whether user A is blocked. As shown in figures, the implementation steps are as follows:
S501. The server X of the chat room sends a SIP NOTIFY message to the IM Server Sb. The SIP NOTIFY contains the URI of user A.
S502. The IM Server Sb forwards the SIP NOTIFY message to the client B.
S503. The client B returns a SIP 200 "OK" to the IM Server Sb, indicating the receipt of the SIP NOTIFY message.
S504. The IM Server Sb forwards the SIP 200 "OK" to the server X.
S505. The IM Server Sb determines whether the user B has blocked the user A according to the block list of user B stored in the IM Server Sb, and if the user B has blocked the user A, sends a SIP MESSAGE to the client B. The SIP MESSAGE contains the URI of user A. If the user B has not blocked the user A, the process is ended.
S506. The client B sends a SIP 200 "OK" response to the IM Server Sb, indicating the receipt of the SIP MESSAGE.

In a similar way, the client B analyzes the SIP MESSAGE, and learns that the user A blocked by the user B has joined the chat room.

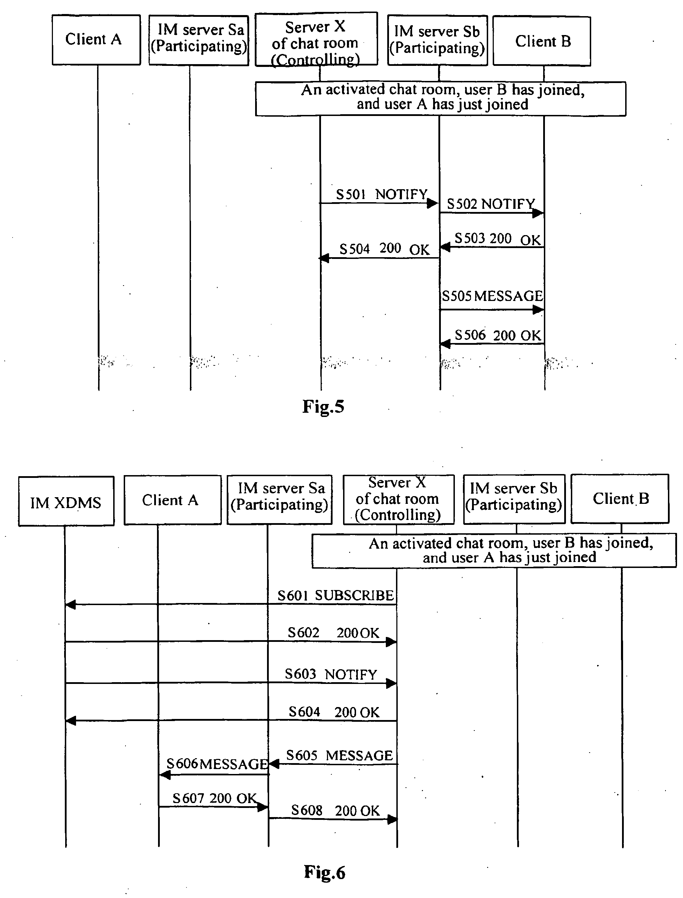

In an embodiment as shown in Figure 6, if a user (e.g. user B) which is already in the chat room is listed in the block list of the user A, the control server of the chat room, i.e., the server X, makes a query to the IM XDMS about the block relationship and sends a notification to user A notifying that a blocked user is in the chat room. This embodiment describes the case in which the user B which is already in the chat room is blocked. Other cases are similar to this one. The embodiment includes the steps as follows:
S601. The server X sends a SIP SUBSCRIBE message to the IM XDMS of the user A. In the SIP message, Request-URI is URI of the chat room, Event is sip-profile or ua-profile etc., and Expires is 0.
S602. The IM XDMS sends a first SIP 200 "OK" response to the server X, indicating the receipt of the SIP SUBSCRIBE message.
S603. The IM XDMS retrieves a block list of the user A from the memory and sends a SIP NOTIFY message to the server X. The SIP NOTIFY message contains the block list of the user A.
S604. The server X sends a second SIP 200 "OK" response to the IM XDMS, indicating the receipt of the SIP NOTIFY message.
S605. The server X determines whether the user A has blocked a user which is already in the chat room according to the SIP NOTIFY message. If the user A has blocked a user which is already in the chat room, for example, user B, the server X sends a SIP MESSAGE to the IM Server Sa. The SIP MESSAGE contains a list of users blocked by the user A. If the user A has not blocked a user which is already in the chat room, the process is ended.
S606. When receiving the SIP MESSAGE, the IM Server Sa determines that the destination party is client A, and forwards the SIP MESSAGE to the client A.
S607. The client A sends a third SIP 200 "OK" response to the IM Server Sa, indicating the receipt of the SIP MESSAGE.
S608. When receiving the third SIP 200 "OK" response, the IM Server Sa determines that the third SIP 200 "OK" response is a response to the server X, and forwards the third SIP 200 "OK" response to the server X.

The client A analyzes the received SIP MESSAGE, and learns that the user B blocked by the user A is already in the chat room.

Similar to the embodiment as shown in Figure 6, in another embodiment of the present invention, at step S603, the IM XDMS determines whether the user A has blocked a user which is already in the chat room directly according to the block list of the user A stored in the IM XDMS, and returns a list of users which are already in the chartroom and blocked by the user A by using an SIP NOTIFY message. Accordingly, the rule content of Filter needs to be included in the SIP SUBSCRIBE message sent from the server X to the IM XDMS in step S601.

Similar to the embodiment shown in Figure 6, in another embodiment of the present invention, the server X of the chat room communicates with the IM XDMS by XML Configuration Access Protocol (XCAP). Particularly, steps S601-S604 as shown in the Figure 6 are simplified into the two steps as follows:
S611. The server X sends a XCAP message to the IM XDMS of the user A (using HTTP GET). The XCAP message contains the URI of user A.
S612. The IM XDMS retrieves the block list of the user A from the memory and returns a XCAP message (HTTP 200 OK) to the server X. The HTTP 200 OK contains the block list of the user A.

The subsequent steps are the same as steps S605-S608 of the embodiment as shown in Figure 6.

Similarly, in another embodiment of the present invention, the server IM XDMS may determine whether user A has blocked a user which is already in the chat room directly according to the block list of the user A stored in the IM XDMS, and carries a list of users blocked by the user A in the XCAP message HTTP 200 OK.

Similar to the embodiment as shown in Figure 6, in another embodiment of the present invention, the block list of user A is not stored in the server IM XDMS, but stored in the IM Server Sa of the user A. Particularly, steps S601-S604 as shown in Figure 6 are modified to the 4 steps S621-624 as follows:
S621. The server X sends a SIP SUBSCRIBE message to the IM Server Sa. In the SIP message, Request-URI is URI of the chat room, Event is sip-profile or ua-profile etc., and Expires is 0.
S622. The IM Server Sa sends a first SIP 200 "OK" response to the server X, indicating the receipt of the SIP SUBSCRIBE message.
S623. The IM Server Sa retrieves a block list of the user A from the memory, and sends a SIP NOTIFY message to the server X. The SIP NOTIFY message contains the block list of the user A.
S624. The server X sends a second SIP 200 "OK" response to the IM Server Sa, indicating the receipt of the SIP NOTIFY message.

The subsequent steps are the same as steps S605-S608 of the embodiment as shown in Figure 6.

Similarly, in another embodiment of the present invention, the IM Server Sa may determine whether the user A has blocked a user which is already in the chat room according to the block list of user A stored in the IM Server Sa, and carries a list of users which is already in the chat room and blocked by the user A in a returned NOTIFY message.

Similar to the embodiment as shown in Figure 6, in another embodiment of the present invention, the block list of the user A is not stored in the server IM XDMS, but stored in the control server X of the chat room. When client A joins the chat room, the IM Server Sa has brought the block list of the user A into the chat room. When the IM Server Sa forwards the SIP INVITE request, XML MIME BODY in the SIP INVITE request contains the block list of the user A. Thus, the steps S601-S604 of the embodiment as shown in Figure 6 may be omitted. The server X determines whether user A has blocked a user which is already in the chat room according to the block list of user A stored in the server X, and executes the steps S605-S608 of the embodiment as shown in Figure 6.

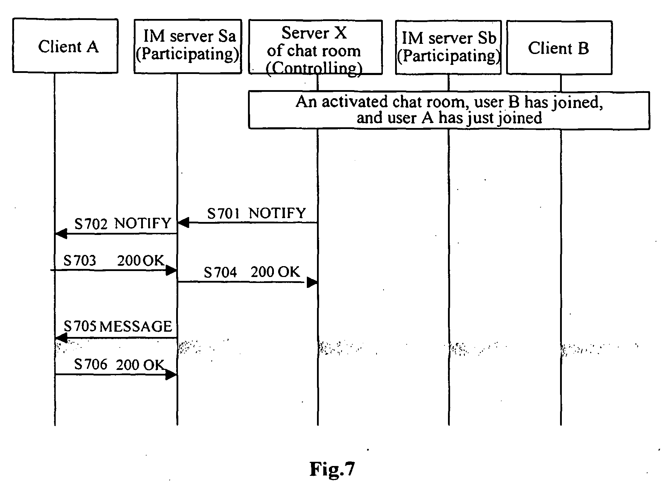

Similar to the embodiment shown in Figure 6, in another embodiment of the present invention, the block list of user A is stored in the IM Server Sa. So, the control server X of the chat room may send a SIP MOTIFY message to the IM Server Sa, then to the client A. The IM Server Sa determines a list of users which are already in the chat room and blocked by the user A. As shown in Figure 7, the embodiment includes the steps as follows:
S701. The control server X of the chat room sends a SIP NOTIFY message to the IM Server Sa. The SIP NOTIFY contains a list of users in the chat room.
S702. The IM Server Sa forwards the STP NOTIFY message to the client A.
S703. The client A returns a SIP 200 "OK" to the IM Server Sa, indicating the receipt of the SIP NOTIFY message.
S704. The IM Server Sa forwards the SIP 200 "OK" to the server X.
S705. The IM Server Sa determines whether the user A has blocked a user which is already in the chat room according to the block list of the user A stored in the IM Server Sa. If the user A has blocked a user which is already in the chat room, for example, user B, the IM Server Sa sends a SIP MESSAGE to the client A. The SIP MESSAGE contains a list of users blocked by the user A. If the user A has not blocked a user which is already in the chat room, the process is ended.
S706. The client A sends a response SIP 200 "OK" to the IM Server Sa, indicating the receipt of the SIP MESSAGE.

In a similar way, the client A analyzes the received SIP MESSAGE, and learns that the user B blocked by the user A is already in the chat room.

Similar to the above embodiment, in another embodiment of the present invention, the MSRP may be used for sending messages between the server X of the chat room and IM servers Sa and Sb, and between a client and a home IM server. The MSRP channels are established during the process of the client joining the chat room. The messages include MSRP SEND message and MSRP 200 OK response message carrying message content.

In the above-mentioned embodiments, the block relationship between the users is determined by the servers. In another embodiment of the present invention, the block relationship may also be determined by a client. The block list of a user may be stored in the client of the user, or may be obtained from the HTTP/XCAP message sent from the client to the IM XDMS. For an chat room having multiple users (e.g. user B), after a user A joins the chat room, if the user B subscribed the state change notification of the chat room (the state change notification may be subscribed by sending a SIP SUBSCRIBE message from the client to the control server of the chat room), the control server of the chat room sends a notification message (using SIP NOTIFY) to the client B notifying that the user A has joined the chat room. The notification message contains the URI of the user A. When receiving the notification message, the client B directly determines whether the user B has blocked the user A. If the user B has blocked the user A, the client B notifies the user B that the blocked user A has newly joined the chat room via a certain interface form (such as text, pop-up dialog box and small animation etc.).

After the user A joins the chat room, if the user A has subscribed the state change notification of the chat room (the state change notification may be subscribed by sending a SIP SUBSCRIBE message from the client to the control server of the chat room, or by adding a subscription mark in the SIP INVITE message sent when joining the chat room). The control server of chat room, i.e., the server X, sends a notification message containing the block lists in the chat room to the client A. When receiving the notification message, the client A determines whether the user A has blocked a user which is already in the chat room (e.g. user B). If the user A has blocked a user which is already in the chat room, the client A notifies the user A that a blocked user (e.g. user B) is in the chat room via a certain interface form.

In addition to subscribing the state change notification of the chat room, the client of a user may send a query message to the control server of the chat room periodically or only one time. The query message may use an SIP SUBCRIBE message, in the SIP SUBCRIBE message, message, header Expire is set to 0. "Periodically" means that the client sends an SIP SUBSCRIBE message to the control server of the chat room periodically, for example, once every 10 minutes. When receiving the query message, the control server of the chat room returns an SIP NOTIFY message to the client. The SIP NOTIFY message contains a list of users in the chat room. The client determines whether a blocked user is in the current chat room according to the list of users and a block list stored in the client.

While the present invention has been illustrated and described with reference to some preferred embodiments, the present invention is not limited to these. Those skilled in the art should recognize that various variations and modifications can be made without departing from the scope of the present invention as defined by the accompanying claims and their equivalents.

## Claims

1. A method for notifying block information, **characterized by** comprising:
determining (S505), by a user home instant messaging server of a blocking party, whether a new user or an existing user is blocked by the blocking party according to a user block list of the blocking party stored in the user home instant messaging server when the new user joins an instant messaging system;
sending (S505), by the user home instant messaging server, a notification message containing block information to a client of the blocking party notifying the blocking party that a blocked user is in the instant messaging system if determining that the new user or the existing user is blocked by the blocking party, the blocking party being one of the new user and the existing user, and the blocked user being the other one of the new user and the existing user.

2. The method according to claim 1,
wherein the user block list contains the block relationship between the new user and the existing user.

3. The method according to claim 1, wherein sending a notification message containing block information to the client of the blocking party comprises:
if the blocking party is the new user in the instant messaging system, sending a notification message to a client of the new user notifying that a blocked user is in the instant messaging system;
if the blocking party is the existing user in the instant messaging system, sending a notification message to a client of the existing user notifying that a blocked user is the new user in the instant messaging system.

4. The method according to claim 1, wherein the user home instant messaging server determines the block relationship according to a received state change notification message of the instant messaging system, the state change notification message is subscribed by the blocking party, and after the new user joins the instant messaging system, a control server sends the state change notification message to the user home instant messaging server of the blocking party in the instant messaging system.

5. The method according to claim 4, wherein if the blocking party is the existing user, the state change notification message sent from the control server to the home instant messaging server of the existing user contains the Uniform Resource Identifier of the new user;
if the blocking party is the new user, the state change notification message sent to the home instant messaging server of the new user contains a list of existing users in the instant messaging system.

6. A method for notifying block information, **characterized by** comprising:
determining, by a client of a user, whether a new user or an existing user is blocked according to a stored or obtained user block list of the user when the new user joins an instant messaging system; and if the new user or the existing user is blocked, presenting block information at the client of the user, the user being one of the new user or the existing user.

7. The method according to claim 6, wherein the client determines whether there is a block relationship according to a received state change notification message of the instant messaging system, the state change notification message is sent from a control server to the client of the user in the instant messaging system after the new user joins the instant messaging system, and the state change notification message is subscribed by the user.

8. The method according to claim 7, wherein the state change notification message sent from the control server to the home instant messaging server of the existing user contains the Uniform Resource Identifier of the new user;
the state change notification message sent to the home instant messaging server of the new user contains a list of existing users in the instant messaging system.

9. The method according to claim 7, wherein the state change notification message is fed back by the control server to the client according to a state query request of the client.

10. The method according to claim 9, wherein the client sends the state query request to the control server periodically or only one time.

11. An instant messaging system, comprising:
an instant messaging terminal, for joining an instant messaging system, and receiving a notification message containing block information;
an instant messaging control server, for accepting a new user corresponding to the instant messaging terminal to join the instant messaging system;
**characterized by** further comprising a user home instant messaging server, for storing a user block list, determining that there is a block relationship between the new user and an existing user according to the user block list, and sending a notification message containing block information to a client of blocking party informing the blocking party that a blocked user is in the instant messaging system,
wherein the blocking party is one of the new user and the existing user, and the blocked user is the other one of the new user and the existing user.

12. An instant messaging terminal, comprising:
a first module, for joining an activated instant messaging system;
**characterized by** further comprising a second module, for determining whether a new user or existing user is blocked according to a stored or obtained user block list, and presenting block information if the new user or existing user is blocked.

## Patentansprüche

1. Verfahren zur Blockinformations-Benachrichtigung, **dadurch gekennzeichnet, dass** es die folgenden Schritte umfasst:
ein Benutzer-Heim-Instant-Messaging-Server eines blockierenden Teilnehmers bestimmt (S505), ob ein neuer Benutzer oder ein existierender Benutzer von dem blockierenden Teilnehmer blockiert wird, gemäß einer Benutzer-Blockliste des blockierenden Teilnehmers, die in dem Benutzer-Heim-Instant-Messaging-Server gespeichert ist, wenn der neue Benutzer zu einem Instant-Messaging-System beitritt;
der Benutzer-Heim-Instant-Messaging-Server sendet (S505) eine Benachrichtigungsnachricht, die Blockinformationen enthält, zu einem Client des blockierenden Teilnehmers, die den blockierenden Teilnehmer benachrichtigt, dass sich ein blockierter Benutzer in dem Instant-Messaging-System befindet, wenn bestimmt wird, dass der neue Benutzer oder der existierende Benutzer von dem blockierenden Teilnehmer blockiert wird, wobei der blockierende Teilnehmer einer von dem neuen Benutzer und dem existierenden Benutzer ist und der blockierte Benutzer der andere von dem neuen Benutzer und dem existierenden Benutzer ist.

2. Verfahren nach Anspruch 1,
wobei die Benutzer-Blockliste die Blockbeziehung zwischen dem neuen Benutzer und dem existierenden Benutzer enthält.

3. Verfahren nach Anspruch 1, wobei das Senden einer Benachrichtigungsnachricht, die Blockinformationen enthält, zu dem Client des blockierenden Teilnehmers Folgendes umfasst:
wenn der blockierende Teilnehmer der neue Benutzer in dem Instant-Messaging-System ist, wird eine Benachrichtigungsnachricht zu einem Client des neuen Benutzers gesendet, die benachrichtigt, dass sich ein blockierter Benutzer in dem Instant-Messaging-System befindet;
wenn der blockierende Teilnehmer der existierende Benutzer in dem Instant-Messaging-System ist, wird eine Benachrichtigungsnachricht zu einem Client des existierenden Benutzers gesendet, die benachrichtigt, dass ein blockierter Benutzer der neue Benutzer in dem Instant-Messaging-System ist.

4. Verfahren nach Anspruch 1, wobei der Benutzer-Heim-Instant-Messaging-Server die Blockbeziehung gemäß einer empfangenen Zustandsänderungs-Benachrichtigungsnachricht des Instant-Messaging-Systems bestimmt, die Zustandsänderungs-Benachrichtigungsnachricht von dem blockierenden Teilnehmer abonniert wird und ein Steuerserver die Zustandsänderungs-Benachrichtigungsnachricht zu dem Benutzer-Heim-Instant-Messaging-Server des blockierenden Teilnehmers in dem Instant-Messaging-System sendet, nachdem der neue Benutzer zu dem Instant-Messaging-System beitritt.

5. Verfahren nach Anspruch 4, wobei, wenn der blockierende Teilnehmer der existierende Benutzer ist, die von dem Steuerserver zu dem Heim-Instant-Messaging-Server des existierenden Benutzers gesendete Zustandsänderungs-Benachrichtigungsnachricht den Uniform Resource Identifier des neuen Benutzers enthält;
und wenn der blockierende Teilnehmer der neue Benutzer ist, die zu dem Heim-Instant-Messaging-Server des neuen Benutzers gesendete Zustandsänderungs-Benachrichtigungsnachricht eine Liste existierender Benutzer in dem Instant-Messaging-System enthält.

6. Verfahren zur Blockinformations-Benachrichtigung, **dadurch gekennzeichnet, dass** es die folgenden Schritte umfasst:
ein Client eines Benutzers bestimmt, ob ein neuer Benutzer oder ein existierender Benutzer blockiert wird, gemäß einer gespeicherten oder erhaltenen Benutzer-Blockliste des Benutzers, wenn der neue Benutzer zu einem Instant-Messaging-System beitritt; und wenn der neue Benutzer oder der existierende Benutzer blockiert wird, werden in dem Client des Benutzers Blockinformationen präsentiert, wobei der Benutzer einer von dem neuen Benutzer und dem existierenden Benutzer ist.

7. Verfahren nach Anspruch 6, wobei der Client gemäß einer empfangenen Zustandsänderungs-Benachrichtigungsnachricht des Instant-Messaging-Systems bestimmt, ob eine Blockbeziehung besteht, die Zustandsänderungs-Benachrichtigungsnachricht von einem Steuerserver zu dem Client des Benutzers in dem Instant-Messaging-System gesendet wird, nachdem der neue Benutzer zu dem Instant-Messaging-System beitritt, und die Zustandsänderungs-Benachrichtigungsnachricht von dem Benutzer abonniert wird.

8. Verfahren nach Anspruch 7, wobei die von dem Steuerserver zu dem Heim-Instant-Messaging-Server des existierenden Benutzers gesendete Zustandsänderungs-Benachrichtigungsnachricht den Uniform Resource Identifier des neuen Benutzers enthält;
die zu dem Heim-Instant-Messaging-Server des neuen Benutzers gesendete Zustandsänderungs-Benachrichtigungsnachricht eine Liste existierender Benutzer in dem Instant-Messaging-System enthält.

9. Verfahren nach Anspruch 7, wobei die Zustandsänderungs-Benachrichtigungsnachricht gemäß einer Zustandsabfrageanforderung des Client durch den Steuerserver an den Client zurückgemeldet wird.

10. Verfahren nach Anspruch 9, wobei der Client die Zustandsabfrageanforderung periodisch oder nur einmal zu dem Steuerserver sendet.

11. Instant-Messaging-System, umfassend:
ein Instant-Messaging-Endgerät zum Beitreten zu einem Instant-Messaging-System und zum Empfangen einer Benachrichtigungsnachricht, die Blockinformationen enthält;
einen Instant-Messaging-Steuerserver zum Annehmen eines dem Instant-Messaging-Endgerät entsprechenden neuen Benutzers für den Beitritt zu dem Instant-Messaging-System;
**dadurch gekennzeichnet, dass** es ferner einen Benutzer-Heim-Instant-Messaging-Server umfasst, zum Speichern einer Benutzer-Blockliste, Bestimmen, dass eine Blockbeziehung zwischen dem neuen Benutzer und einem existierenden Benutzer besteht, gemäß der Benutzer-Blockliste und Senden einer Benachrichtigungsnachricht, die Blockinformationen enthält, zu einem Client des blockierenden Teilnehmers, die den blockierenden Teilnehmer informiert, dass sich ein blockierter Benutzer in dem Instant-Messaging-System befindet,
wobei der blockierende Teilnehmer einer von dem neuen Benutzer und dem existierenden Benutzer ist und der blockierte Benutzer der andere von dem neuen Benutzer und dem existierenden Benutzer ist.

12. Instant-Messaging-Endgerät, umfassend:
ein erstes Modul zum Beitreten zu einem aktivierten Instant-Messaging-System;
**dadurch gekennzeichnet, dass** es ferner ein zweites Modul umfasst, zum Bestimmen, ob ein neuer Benutzer oder ein existierender Benutzer blockiert wird, gemäß einer gespeicherten oder erhaltenen Benutzer-Blockliste und Präsentieren von Blockinformationen, wenn der neue Benutzer oder existierende Benutzer blockie

## Revendications

1. Procédé de notification d'informations de blocage, **caractérisé en ce qu'**il comprend :
la détermination (S505), par un serveur de messagerie instantanée de rattachement d'utilisateur d'un correspondant bloquant, si un nouvel utilisateur ou un utilisateur existant est bloqué par le correspondant bloquant en fonction d'une liste de blocage d'utilisateur du correspondant bloquant stockée dans le serveur de messagerie instantanée de rattachement d'utilisateur quand le nouvel utilisateur se joint à un système de messagerie instantanée ;
l'envoi (S505), par le serveur de messagerie instantanée de rattachement d'utilisateur, d'un message de notification contenant des informations de blocage à un client du correspondant bloquant notifiant au correspondant bloquant qu'un utilisateur bloqué se trouve dans le système de messagerie instantanée s'il est déterminé que le nouvel utilisateur ou l'utilisateur existant est bloqué par le correspondant bloquant, le correspondant bloquant étant l'un du nouvel utilisateur et de l'utilisateur existant, et l'utilisateur bloqué étant l'autre du nouvel utilisateur et de l'utilisateur existant.

2. Procédé selon la revendication 1, dans lequel la liste de blocage d'utilisateur contient la relation de blocage entre le nouvel utilisateur et l'utilisateur existant.

3. Procédé selon la revendication 1, dans lequel l'envoi d'un message de notification contenant des informations de blocage au client du correspondant bloquant comprend :
si le correspondant bloquant est le nouvel utilisateur dans le système de messagerie instantanée, l'envoi d'un message de notification à un client du nouvel utilisateur notifiant qu'un utilisateur bloqué se trouve dans le système de messagerie instantanée ;
si le correspondant bloquant est l'utilisateur existant dans le système de messagerie instantanée, l'envoi d'un message de notification à un client de l'utilisateur existant notifiant qu'un utilisateur bloqué est le nouvel utilisateur dans le système de messagerie instantanée.

4. Procédé selon la revendication 1, dans lequel le serveur de messagerie instantanée de rattachement d'utilisateur détermine la relation de blocage en fonction d'un message de notification de changement d'état reçu du système de messagerie instantanée, le message de notification de changement d'état est souscrit par le correspondant bloquant, et après que le nouvel utilisateur s'est joint au système de messagerie instantanée, un serveur de commande envoie le message de notification de changement d'état au serveur de messagerie instantanée de rattachement d'utilisateur du correspondant bloquant dans le système de messagerie instantanée.

5. Procédé selon la revendication 4, dans lequel si le correspondant bloquant est l'utilisateur existant, le message de notification de changement d'état envoyé par le serveur de commande au serveur de messagerie instantanée de rattachement de l'utilisateur existant contient l'Identifiant de Ressource Uniforme du nouvel utilisateur ;
si le correspondant bloquant est le nouvel utilisateur, le message de notification de changement d'état envoyé au serveur de messagerie instantanée de rattachement du nouvel utilisateur contient une liste d'utilisateurs existants dans le système de messagerie instantanée.

6. Procédé de notification d'informations de blocage, **caractérisé en ce qu'**il comprend :
la détermination, par un client d'un utilisateur, si un nouvel utilisateur ou un utilisateur existant est bloqué ou non en fonction d'une liste de blocage d'utilisateur stockée ou obtenue de l'utilisateur quand le nouvel utilisateur se joint au système de messagerie instantanée ; et si le nouvel utilisateur ou l'utilisateur existant est bloqué, la présentation d'informations de blocage au niveau du client de l'utilisateur, l'utilisateur étant l'un du nouvel utilisateur ou de l'utilisateur existant.

7. Procédé selon la revendication 6, dans lequel le client détermine s'il existe ou non une relation de blocage en fonction d'un message de notification de changement d'état reçu du système de messagerie instantanée, le message de notification de changement d'état est envoyé depuis un serveur de commande au client de l'utilisateur dans le système de messagerie instantanée après que le nouvel utilisateur s'est joint au système de messagerie instantanée, et le message de notification de changement d'état est souscrit par l'utilisateur.

8. Procédé selon la revendication 7, dans lequel le message de notification de changement d'état envoyé par le serveur de commande au serveur de messagerie instantanée de rattachement de l'utilisateur existant contient l'Identifiant de Ressource Uniforme du nouvel utilisateur ;
le message de notification de changement d'état envoyé au serveur de messagerie instantanée de rattachement du nouvel utilisateur contient une liste d'utilisateurs existants dans le système de messagerie instantanée.

9. Procédé selon la revendication 7, dans lequel le message de notification de changement d'état est renvoyé par le serveur de commande au client en fonction d'une requête d'interrogation d'état du client.

10. Procédé selon la revendication 9, dans lequel le client envoie la requête d'interrogation d'état au serveur de commande périodiquement ou une seule fois.

11. Système de messagerie instantanée, comprenant :
un terminal de messagerie instantanée, pour se joindre à un système de messagerie instantanée, et recevoir un message de notification contenant des informations de blocage ;
un serveur de commande de messagerie instantanée, pour accepter qu'un nouvel utilisateur correspondant au terminal de messagerie instantanée se joigne au système de messagerie instantanée ;
**caractérisé en ce qu'**il comprend en outre un serveur de messagerie instantanée de rattachement d'utilisateur, pour stocker une liste de blocage d'utilisateur, déterminer qu'il existe une relation de blocage entre le nouvel utilisateur et un utilisateur existant en fonction de la liste de blocage d'utilisateur, et envoyer un message de notification contenant des informations de blocage à un client du correspondant bloquant informant le correspondant bloquant qu'un utilisateur bloqué se trouve dans le système de messagerie instantanée,
dans lequel le correspondant bloquant est l'un du nouvel utilisateur et de l'utilisateur existant, et l'utilisateur bloqué est l'autre du nouvel utilisateur et de l'utilisateur existant.

12. Terminal de messagerie instantané, comprenant :
un premier module, pour se joindre au système de messagerie instantanée activé;
**caractérisé par le fait qu'**il comprend en outre un second module, pour déterminer si un nouvel utilisateur ou un utilisateur existant est bloqué ou non en fonction d'une liste de blocage d'utilisateur stockée ou obtenue, et présenter des informations de blocage si le nouvel utilisateur ou l'utilisateur existant est bloqué.
